(19) Europäisches Patentamt
European Patent Office
Office européen des brevets

(11) Publication number: 0 327 644
A1

(12) # EUROPEAN PATENT APPLICATION

published in accordance with Art. 158(3) EPC

(21) Application number: 87904133.3

(22) Date of filing: 30.06.87

Data of the international application taken as a basis:

(86) International application number:
PCT/JP87/00442

(87) International publication number:
WO89/00176 (12.01.89 89/02)

(51) Int. Cl.[3]: C 08 L 67/00
//(C08L67/00, 23:08, 23:26)

(43) Date of publication of application:
16.08.89 Bulletin 89/33

(84) Designated Contracting States:
AT BE CH DE FR GB IT LI NL SE

(71) Applicant: SUMITOMO CHEMICAL COMPANY, LIMITED
Kitahama 4-chome 5-33
Chuo-ku Osaka 541(JP)

(72) Inventor: INOUE, Masakazu
162-24, Oaza-Fukawa Konan-cho
Koka-gun Shiga 520-33(JP)

(72) Inventor: ASAI, Kuniaki
8-8, Tanigawa-cho Tondabayashi-shi
Osaka 584(JP)

(72) Inventor: SUZUKI, Yasuro
1-9, Yusyudai-nishi Ichihara-shi
Chiba 299-01(JP)

(74) Representative: Allard, Susan Joyce et al,
BOULT, WADE & TENNANT 27 Furnival Street
London EC4A 1PQ(GB)

(54) ## POLYARYLENE ESTER RESIN COMPOSITION.

(57) A polyarylene ester resin composition which comprises: (A) 60 to 99 wt % of polyarylene ester; and (B) 40 to 1 wt % of ethylene copolymer composed of 50 to 90 wt % of ethylene, 5 to 49 wt % of α, β-unsaturated carboxylic acid alkyl ester, and 0.5 to 10wt % of maleic anhydride, is disclosed. This composition has markedly improved notch independence of impact strength without decreasing good heat deformation properties of polyarylene ester, and is useful as engineering plastics for use in electronic components, automobile parts, office automation appliance parts, etc. wherein reduction in thickness and size is required.

EP 0 327 644 A1

Croydon Printing Company Ltd.

SPECIFICATION

# Polyarylene ester resin composition

## Technical Field

This invention relates to a polyarylene ester resin composition having excellent impact properties.

## Technical Background

Generally, the impact strength of plastics varies largely depending on the thickness of shaped articles produced therefrom and the radius of notched part in the shaped articles. It is said that among engineering plastics, polycarbonates are one of the resins having highest impact strength, but the property depends largely on the thickness and the radius of notched part of the shaped articles.

On the other hand, polyarylene esters have less impact strength than polycarbonates, but the property is less dependent on the thickness and the radius of notched part, and further, polyarylene esters have superior heat resistance than polycarbonates, for example, a heat distortion temperature of about 40°C higher than that of polycarbonates, and the polyarylene esters are aimed at the use as a material for the parts of electric and/or electronic equipments, automobiles and office automation equipments, which have recently been desired to be

miniaturized and to have thin-wall.

However, the polyarylene esters have still low impact strength when used for articles having a sharp notch, and hence, it has highly been desired to obtain a polyarylene ester composition having improved properties in less dependency on the radius of notched part.

Description of the Invention

In view of the above situation, the present inventors have intensively studied and have found that a composition having excellent impact properties without deteriorating the original excellent properties of the polyarylene ester can be obtained by incorporating an ethylene copolymer consisting of ethylene, $\alpha,\beta$-unsaturated carboxylic acid alkyl ester and maleic anhydride into the polyarylene ester.

That is, an object of the invention is to provide a composition having improved impact properties with less denpendy on the radius of notched part without lowering the heat distortion resistance.

The resin composition of this invention comprises

(A) 60 to 99 % by weight of a polyarylene ester, and

(B) 40 to 1 % by weight of an ethylene copolymer consisting of 50 to 90 % by weight of ethylene, 5 to 49 % by weight of an $\alpha,\beta$-unsaturated carboxylic acid alkyl ester and 0.5 to 10 % by weight of maleic anhydride.

The polyarylene ester used in this invention includes polyesters produced from a diphenol or a derivative thereof and an aromatic dicarboxylic acid or a derivative thereof.

The diphenols are specifically the compounds of the formula:

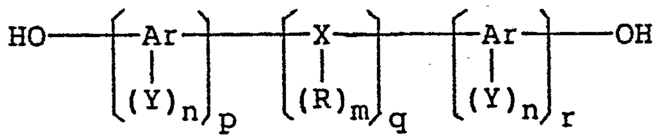

wherein Ar is an aromatic nucleus such as a phenylene nucleus, a biphenylene nuleus, or a napthylene nucleus,

R is hydrogen atom, an alkyl group ($C_1$-$C_4$ alkyl group, e.g. methyl or ethyl, etc.), a halogenated $C_1$-$C_4$ alkyl group, an aryl group (e.g. phenyl, naphthyl), a halogenated aryl group, an aralkyl group (e.g. benzyl, phenylethyl), a halogenated aralkyl group, a $C_1$-$C_4$ alkyl-substituted aryl group, a halogenated $C_1$-$C_4$ alkyl-substituted aryl group, an alicyclic group, or a halogenated alicyclic group,

X is a $C_1$-$C_4$ alkylene or $C_1$-$C_4$ alkylidene group such as methylene, ethylene, propylene, ethylidene, propylidene, isopropylidene; or two or more $C_1$-$C_4$ alkylene or $C_1$-$C_4$ alkylidene groups which are mutually bound via an aromatic group, a tertiary amino group [-N(alkyl)-], an ether group (-O-), a carbonyl group (-CO-), or a sulfur-containing group such as sulfide (-S-), sulfoxide (-SO-) or

sulfonyl ($-SO_2-$); or X may be an alicyclic group, or a sulfur-containing group such as sulfide, sulfoxide or sulfonyl, an ether group, a carbonyl group, or a tertiary amino group,

Y is a halogen atom, nitro group, or the same as R' or OR' (R' is the same as R as defined above),

m is 0 or an integer up to the number of hydrogen atom being able to be substituted on the group X,

n is 0 or an integer up to the number of hydrogen atom being able to be substituted on the aromatic Ar nucleus,

p is an integer of at least one,

q is an integer of 0 to 1, and

r is an integer of at least one (provided that when q is 0, r may be 0).

When the diphenols as mentioned above have one or more substituents Y, those Ys may be the same or different. The same is applicable to R and R'. The substituent Y and hydroxy group on the aromatic nucleus may be substituted at any correlation position of ortho-, meta- or para-. The above diphenols may also be used in combination of two or more thereof.

Specific examples of the diphenols are bis(4-hyroxyphenyl)methane, bis(4-hydroxy-3-methylphenyl)methane, bis(4-hydroxy-3,5-dichlorophenyl)methane, bis(4-hydroxy-3,5-dibromophenyl)methane, bis(4-hydroxy-3,5-difluorophenyl)-

methane, bis(4-hydroxyphenyl) ketone, bis(4-hydroxyphenyl)-sulfide, bis(4-hydroxyphenyl)sulfone, 4,4-dihydroxydiphenyl ether, 1,1-bis(4-hydroxyphenyl)ethane, 2,2-bis(4-hydroxyphenyl)propane, 2,2-bis(4-hydroxy-3-methylphenyl)propane, 2,2-bis(4-hydroxy-3-chlorophenyl)propane, 2,2-bis(4-hydroxy-3,5-dichlorophenyl)propane, 2,2-bis(4-hydroxynaphthyl)-propane, bis(4-hydroxyphenyl)phenylmethane, bis(4-hydroxyphenyl)diphenylmethane, bis(4-hydroxyphenyl)-4-methylphenylmethane, 1,1-bis(4-hydroxyphenyl)-2,2,2-trichloroethane, bis(4-hydroxyphenyl)-(4-chlorophenyl)methane, 1,1-bis(4-hydroxyphenyl)cyclohexane, bis(4-hydroxyphenyl)cyclohexylmethane, 4,4-dihydroxydiphenyl, 2,2-dihydroxydiphenyl, dihydroxynaphthalene (e.g. 2,6-dihydroxynaphthalene), hydroquinone, resorcinol, 2,6-dihydroxytoluene, 2,6-dihydroxychlorobenzene, 3,6-dihydroxytoluene.

The derivative of the diphenols includes diesters such as $C_1$-$C_4$ alkyl or phenyl esters of the above diphenols, which may also be used in a mixture thereof.

The aromatic dicarboxylic acid is a compound of the formula:

HOOC-Ar'-COOH

wherein Ar' is an arylene such as o-phenylene, m-phenylene, p-phenylene, or naphthylene which may be substituted by a $C_1$-$C_4$ alkyl group or a halogen atom. The aromatic dicarboxylic acids may also be used in combination of two or more thereof.

The derivative of the aromatic dicarboxylic acids

include dichlorides of the above aromatic dicarboxylic acids, and diesters such as $C_1$-$C_4$ alkyl or phenyl etc. of the above aromatic dicarboxylic acids. The aromatic dicarboxylic acids may also be used in combination of two or more thereof.

The polyarylene esters used in this invention can be prepared from the above-mentioned diphenols or derivatives thereof and the above-mentioned aromatic dicarboxylic acids or derivatives thereof by a conventional method such as interfacial polycondensation, solution polycondensation, melt polycondensation, or the like.

Preferred polyarylene esters has a structure consisting of a residue of bisphenol A [i.e. 2,2-bis(4-hydroxyphenyl)propane], terephthalic acid residue and isophthalic acid residue, which is commercially available in a tradename of "U Polymer" (manufactured by Unitika Ltd.).

The ethylene copolymer used in this invention consists of the monomer components selected from ethylene, an α,β-unsaturated carboxylic acid alkyl ester, and maleic anhydride, that is, it consists of 50 to 90 % by weight, preferably 60 to 85 % by weight, of ethylene, 5 to 49 % by weight, preferably 7 to 45 % by weight, of an α,β-unsaturated carboxylic acid alkyl ester, and 0.5 % to 10 % by weight, preferably 1 to 8 % by weight, of maleic anhydride.

The α,β-unsaturated carboxylic acid alkyl ester

includes esters of unsaturated carboxylic acids having 3 to 8 carbon atoms (e.g. $C_1$-$C_4$ alkyl esters of acrylic acid, methacrylic acid, etc.), and suitable examples thereof are methyl acrylate, ethyl acrylate, n-propyl acrylate, isopropyl acrylate, n-butyl acrylate, t-butyl acrylate, isobutyl acrylate, methyl methacrylate, ethyl methacrylate, n-propyl methacrylate, isopropyl methacrylate, n-butyl methacrylate, t-butyl methacrylate, and isobutyl methacrylate, among which ethyl acrylate, n-butyl acrylate, and methyl methacrylate are particularly preferable.

These ethylene copolymers are incorporated into the polyarylene ester in an amount of 40 to 1 % by weight to 60 to 99 % by weight of the polyarylene ester (based on the whole weight of the polyarylene ester and the ethylene copolymer). When the polyarylene ester is used in an amount of over 99 % by weight and the ethylene copolymer is used in an amount of less than 1 % by weight, the desired impact properties are not sufficiently improved, and on the other hand, when the amount of the polyarylene ester is less than 60 % by weight and the amount of the ethylene copolymer is more than 40 % by weight, the characteristic property of the polyarylene ester, i.e. excellent heat distortion resistance, is disadvantageously significantly deteriorated.

The composition of this invention can be prepared by any conventional methods. For instance, each component may be supplied to a melt mixer separately. Alternatively,

the materials in each component are previously mixed with a mortar, a Henschel mixer, a ball mill, ribbon blender, or the like, and thereafter they are supplied to a melt mixer.

The composition of this invention may also be incorporated with one or more of other conventional additives unless the desired properties are affected, for example, antioxidants, heat stabilizers, ultraviolet absorbers, lubricants, colorants such as dyestuffs and pigments, fire retardants, fire retardant auxiliarys, antistatic agents, and the like.

The composition may further be incorporated with a small amount of other thermoplastic resins (e.g. polyethylenes, polypropylenes, polyamides, polysulfones, polyether sulfones, modified polyphenylene oxides, polyphenylene sulfides, etc.), thermosetting resins (e.g. phenol resins, epoxy resins, etc.), reinforcing agents (e.g. glass fiber, carbon fiber, boron fiber, silicone carbide fiber, asbestos fiber, metallic fiber, etc.), fillers (e.g. clay, mica, silica, graphite, glass beads, alumina, calcium carbonate, etc.), and the like, which are used in an appropriate amount in accordance with the desired utilities.

Best Mode for Practising the Invention

This invention is illustrated by the following Examples but should not be construed to be limited thereto.

Examples 1 to 4

A polyarylene ester having a main unit of the

following formula (U polymer® U-100, manufactured by Unitika Ltd.):

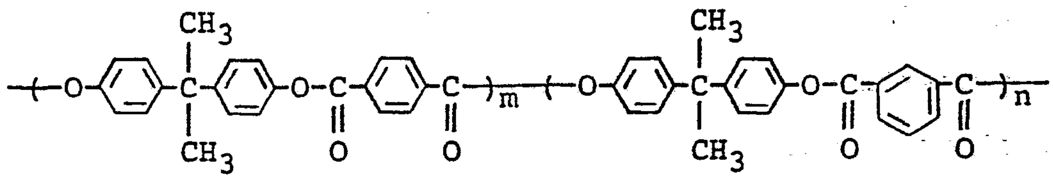

wherein m/n = about 5/5,
was mixed with an ethylene copolymer consisting of 67 % by weight of ethylene, 30.5 % by weight of ethyl acrylate and 2.5 % by weight of maleic anhydride in the mixing ratios as shown in Table 1 and the mixture was melt-kneaded at 300 to 320°C with a twin-screw extruder (PCM-30, manufactured by Ikegai Iron Works, Ltd.) to form strands, and the resulting strands were cooled with water and cut to produce pellets.

The pellets thus obtained were subjected to an injection molding at 330 to 350°C with an injection molding machine (Nestal® 47/28, manufactured by Sumitomo Heavy Industries, Ltd.) to give a test piece for Izod impact test (12.7 x 64 x 6.4 mm, without notch) and a test piece for measurement of heat distortion temperature (12.7 x 127 x 6.4 mm). The test piece for Izod impact test was notched by cutting with notching knives having various tip radiuses.

The Izod impact test and the measurement of heat distortion temperature were carried out by the methods as defined in ASTM D-256 and D-648, respectively.

Reference Examples 1 to 2

In the same manner as described in Examples 1 to 4

except that the polyarylene ester and the ethylene copolymer used in Examples 1 to 4 were used in the mixing ratios as shown in Table 1, there were prepared the test pieces, and the properties thereof were measured, likewise. The results are shown in Table 1.

Table 1

| Ex. No. | Components (% by weight) | | Izod impact strength (kg·cm/cm) | | | Heat distortion temperature under 18.6 kg/$cm^2$ (°C) |
|---|---|---|---|---|---|---|
| | Polyarylene ester | Ethylene copolymer | Radius of notched part (mm) | | | |
| | | | 0 | 0.25 | 0.40 | |
| Ex. 1 | 95 | 5 | 25 | 31 | 56 | 172 |
| " 2 | 90 | 10 | 32 | 38 | 62 | 169 |
| " 3 | 80 | 20 | 40 | 45 | 65 | 164 |
| " 4 | 70 | 30 | 55 | 62 | 75 | 158 |
| Ref. Ex. 1 | 100 | 0 | 10 | 25 | 40 | 175 |
| " 2 | 50 | 50 | 61 | 75 | 82 | 115 |

Utilization in Industry

The composition of this invention comprises a polyarylene ester and an ethylene copolymer consisting of ethylene, an α,β-unsaturated carboxylic acid alkyl ester and maleic anhydride, which has remarkedly improved impact strength with less dependency on radius of notched part without deteriolating the heat distortion resistance of the polyarylene ester. Accordingly, the composition of this invention is useful as an engineering plastic material for parts of electric and/or electronic equipments, parts of automobiles and parts of office automation equipments, which have been desired to be miniaturized and to have thin-wall.

## CLAIMS

1. A resin composition which comprises

(A) 60 to 99 % by weight of a polyarylene ester, and

(B) 40 to 1 % by weight of an ethylene copolymer consisting of 50 to 90 % by weight of ethylene, 5 to 49 % by weight of an α,β-unsaturated carboxylic acid alkyl ester and 0.5 to 10 % by weight of maleic anhydride.

2. The resin composition according to claim 1, wherein the polyarylene ester is a polyester produced from a diphenol or a derivative thereof and an aromatic dicarboxylic acid or a derivative thereof.

3. The resin composition according to claim 2, wherein the diphenol is a diphenol compound of the formula:

$$HO-\left(\underset{(Y)_n}{\overset{|}{Ar}}\right)_p-\left(\underset{(R)_m}{\overset{|}{X}}\right)_q-\left(\underset{(Y)_n}{\overset{|}{Ar}}\right)_r-OH$$

wherein Ar is an aromatic nucleus,

R is hydrogen atom, an alkyl group, a halogenated alkyl group, an aryl group, a halogenated aryl group, an aralkyl group, a halogenated aralkyl group, an alkyl-substituted aryl group, a halogenated alkyl-substituted aryl group, an alicyclic group, or a halogenated alicyclic group,

X is an alkylene group or an alkylidene group; or two or more alkylene or alkylidene groups which are mutually bound via an aromatic group, a tertiary amino group, an

ether group, a carbonyl group, or a sulfur-containing group; or an alicyclic group, a sulfur-containing group, an ether group, a carbonyl group, or a tertiary amino group,

Y is a halogen atom, nitro group, or the same as R' or OR' (R' is the same as R as defined above),

m is 0 or an integer up to the number of hydrogen atom being able to be substituted on the group X,

n is 0 or an integer up to the number of hydrogen atom being able to be substituted on the aromatic Ar nucleus,

p is an integer of at least one,

q is an integer of 0 to 1, and

r is an integer of at least one (provided that when q is 0, r may be 0).

4. The resin composition according to claim 2, wherein the aromatic dicarboxylic acid is an aromatic dicarboxylic acid of the formula:

HOOC-Ar'-COOH

wherein Ar' is an arylene group which may be substituted by a $C_1$-$C_4$ alkyl group or a halogen atom.

5. The resin composition according to claim 1, wherein the ethylene copolymer consists of 60 to 85 % by weight of ethylene, 7 to 45 % by weight of an α,β-unsaturated carboxylic acid alkyl ester, and 1 to 8 % by weight of maleic anhydride.

# 0327644

# INTERNATIONAL SEARCH REPORT

International Application No PCT/JP87/00442

**I. CLASSIFICATION OF SUBJECT MATTER** (if several classification symbols apply, indicate all)

According to International Patent Classification (IPC) or to both National Classification and IPC

Int.$Cl^4$ C08L67/00 //(C08L67/00, C08L23:08, C08L23:26)

**II. FIELDS SEARCHED**

Minimum Documentation Searched [4]

| Classification System | Classification Symbols |
|---|---|
| IPC | C08L67/00-67/04 |

Documentation Searched other than Minimum Documentation to the Extent that such Documents are Included in the Fields Searched [5]

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| Y | JP, A, 61-163956 (Mitsui Dupont Poly-chemical Kabushiki Kaisha) 24 July 1986 (24. 07. 86) (Family: none) Claim | 1-5 |
| Y | JP, A, 48-54159 (Unitika Ltd.) 30 July 1973 (30. 07. 73) Page 1, right column, lines 11 to 14 (Family: none) | 1-5 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| July 8, 1987 (08. 07. 87) | July 27, 1987 (27. 07. 87) |
| International Searching Authority [1] | Signature of Authorized Officer [20] |
| Japanese Patent Office | |